Europäisches Patentamt

European Patent Office

Office européen des brevets

(11) Publication number: **0 205 261**
**B1**

(12) **EUROPEAN PATENT SPECIFICATION**

(45) Date of publication of patent specification: **19.09.90**

(51) Int. Cl.⁵: **C 09 K 19/00,** G 02 F 1/133, C 08 J 3/00

(21) Application number: **86303742.0**

(22) Date of filing: **16.05.86**

(54) **Liquid crystal droplets dispersed in thin films of UV-curable polymers.**

(30) Priority: **10.06.85 US 742983**

(43) Date of publication of application:
**17.12.86 Bulletin 86/51**

(45) Publication of the grant of the patent:
**19.09.90 Bulletin 90/38**

(84) Designated Contracting States:
**CH DE FR GB IT LI**

(56) References cited:
**DE-B-1 908 118**
**US-A-4 030 812**
**US-A-4 182 700**

(73) Proprietor: **GENERAL MOTORS CORPORATION**
**General Motors Building 3044 West Grand Boulevard**
**Detroit Michigan 48202 (US)**

(72) Inventor: **Vaz, Nuno Artur**
**29710 Farmbrook**
**Southfield Michigan 48034 (US)**
Inventor: **Smith, George Wolfram**
**1882 Melbourne**
**Birmingham Michigan 48009 (US)**

(74) Representative: **Haines, Arthur Donald et al**
**Patent Section Vauxhall Motors Limited 1st Floor Gideon House 26 Chapel Street**
**Luton, Bedfordshire LU1 2SE (GB)**

Courier Press, Leamington Spa, England.

## Description

This invention relates to optical films incorporating liquid crystal materials. More specifically, this invention relates to thin films of ultraviolet radiation (UV) cured polymers incorporating a dispersion of microdroplets of liquid crystal materials.

As liquid crystal devices find wider application, there is motivation to develop new and easier ways to make or use packages of these special materials. It is now known that liquid crystal materials and liquid epoxy polymer precursors can be mixed together, the liquid mixture cast into a film, and the epoxy precursor materials allowed to react and cure. The product is an epoxy film that contains dispersed therein, or encapsulated therein, many very small drops of liquid crystal material. Depending upon the nature of the liquid crystal material and the temperature of the film, the film may be opaque at room temperature. However, when the film is heated or subjected to an electrical or magnetic field across its thickness, the treated portions of the film may become transparent.

Dispersion of liquid crystal material in a cured epoxy polymer matrix film is a convenient package for working with the liquid crystals. However, the making of the epoxy films is subject to several disadvantages. The epoxy precursors must be handled in two parts to avoid premature curing. Commonly used liquid crystal materials usually cannot tolerate high temperature. The epoxy precursors must be chosen to be curable at about room temperature. Once all ingredients are mixed, the cure starts. It is relatively slow, and there is little chance to control the size or size distribution of the liquid crystal droplets. Further, the slow cure may lead to aging problems in the epoxy film.

Accordingly, it is an object of the present invention to provide a practice for making thin films of dispersed liquid crystal materials utilizing UV-curable polymeric precursor materials in which the liquid crystal material can be distributed as desired before curing starts. Curing can then be accomplished very rapidly to maintain the distribution.

It is another object of the present invention to provide an easy method to prepare a UV-cured polymer film of dispersed liquid crystal materials that may be formed between flat optical plates of glass or synthetic plastics or upon another suitable substrate. The resultant film may be freestanding or supported by one or two substrates, at least one of which is optically clear. The film can be made in any size or shape and is flexible and yet durable.

It is still another object of the present invention to provide a method of making a polymer film containing droplets of liquid crystal material in which method it is possible to control the size and size distribution of the droplets before cure of the polymer is initiated.

It is another object of the present invention to provide a method of making a liquid crystal-containing polymer film employing polymer materials that can be rapidly and substantially completely cured at room temperature to minimize degradation or any other side reactions with the dispersed liquid crystal material.

It is a more specific object of the present invention to provide a UV-cured film which is the reaction product of suitable specific precursor materials that are compatible with entrained microdroplets of nematic, cholesteric or smectic phase liquid crystal materials.

Brief Summary of the Invention

In accordance with a preferred embodiment of the present invention, these and other objects and advantages are accomplished as follows. A liquid mixture of polymer precursors comprising triallyl isocyanurate, pentaerythritol tetrakis (2-mercapto-propanoate), and benzophenone is prepared in the molar proportions of approximately 55:41:4. A small volume of these polymer precursors is mixed with a slightly smaller volume of a commonly known biphenyl type liquid crystal material that displays the nematic mesophase. The mixing was accomplished by hand stirring. The liquid mixture may be allowed to stand as long as desired before cure is initiated to permit the separation or formation of suitably sized microdroplets of liquid crystal material. Then the liquid mixture is spread between two thin glass plates and exposed to high intensity ultraviolet radiation. The polymer precursors react quickly, in a matter of seconds, to form a cured polymeric matrix.

The polymer portion is substantially transparent to visible light at room temperature and has an index of refraction fairly closely matching that of the isotropic phase of the biphenyl type liquid crystal materials. The liquid crystal material is dispersed as extremely small droplets, of the order of a few tenths of a micrometre in diameter, in the polymer matrix. If a liquid crystal composition has been selected that is in its mesophase at room temperature, the film will be milky-white opaque when prepared as described above provided that the ordinary and extraordinary indices of refraction of the liquid crystal are sufficiently different from each other. However, if the film is heated to a temperature above that at which the material becomes an isotropic liquid, the composite film becomes transparent. The film may also be made to undergo transition from opaque to transparent by subjecting it to a relatively low electrical potential, either a DC potential or a relatively low frequency alternating current potential or even a magnetic field. In each of these cases respectively, the liquid crystal should have positive dielectric anisotropy and positive diamagnetic anisotropy. Moreover, new requirements as to the relative values of the indices of refraction of the liquid crystal and the polymer will clearly apply in order to optimize the effects.

A fundamental aspect of the present invention is the discovery of a suitable UV-curable polymeric precursor family in which liquid crystal material may be dispersed as microdroplets. Different types of liquid crystal materials may be employed in the practice of the present invention. Such materials displaying nematic, cholesteric and smectic mesophases have been successfully used.

The UV-curable polymer is based on the reaction product of triallyl isocyanurate and one or more suitable polythiols selected from the group consisting of $Z[OCO(CH_2)_nSH]_m$, where $Z$ = a polyvalent organic moiety which is the $CH_{0-3}$ group-containing nucleus of a tri- or tetravalent alcohol such as glycerol or pentaerythritol, $m = 3$ or $4$, and $n = 1$ to $5$. Pentaerythritol tetrakis (2-mercapto-propanoate) is particularly suitable and preferred. The proportions of the triallyl isocyanurate and the polythiol are selected as to be substantially chemically equivalent so as to produce a relatively high molecular weight polymer. A suitable photo-initiator is employed. Benzophenone is preferred for this purpose.

Other objects and advantages of the present invention will become more apparent from a detailed description thereof which follows. Reference will be made to the drawings in which:

Description of the Drawings

Figure 1 is a schematic view in cross-section and greatly enlarged of a liquid crystal-containing film of this invention, and

Figure 2 is a schematic view in enlarged cross-section of the film disposed between two transparent plates.

Detailed Description of Specific Embodiments

A few specific examples will further illustrate the practice of the present invention.

Example 1

A commercially available optical adhesive material was employed as the UV-curable polymeric precursor composition. The material consisted of about 55 mole percent triallyl isocyanurate, 41 mole percent pentaerythritol tetrakis (2-mercapto-propanoate], and 4 mole percent benzophenone. A liquid crystal mixture employed was mixture E8 supplied by E M Chemicals, Hawthorne, New York. That mixture of nematic materials consisted of, by weight percent, 4'-n-pentyl-4-cyanobiphenyl (5CB), 43 wt%; 4'-n-propoxy-4-cyanobiphenyl (30CB), 17 wt%; 4'-n-pentoxy-4-cyanobiphenyl (50CB), 13 wt%; 4'-n-octyloxy-4-cyanobiphenyl (80CB), 17 wt%, and 4'-n-pentyl-4-cyanoterphenyl (5CT), 10 wt%. Seventy-five parts by volume of the polymer precursor mixture were mixed with 50 parts by volume of the liquid crystal mixture using a spatula. Several glass slide sandwiches were prepared as follows. A small portion of the mixture was placed on a thin flat rectangular glass plate. A few silica microspheres, about 20 micrometres in diameter, were sprinkled on the plate to serve as spacers between the glass plates. The glass plate had a thin conductive layer of tin oxide on the surface to which the liquid crystal mixture was applied. A like glass plate was laid over the mixture and spacers and pressed down to form a thin film of the mixture about 20 micrometres thick.

The mixture in each slide assembly was then cured under a UV lamp (Fusion Systems Corporation, Rockville, Maryland) having a 300 Watt/inch bulb. The slide assemblies were passed under the lamp at a distance of $7.62 - 0.16$ cm (3-4 inches) on a belt at a speed of 3.048 metres per minute (ten feet per minute) using several of the prepared films. It was determined that three passages, or a total exposure time of about six seconds, was adequate to achieve a suitable cure.

It will be recognized that the commercially available mixture E8 of liquid crystal material is a mixture capable of displaying a nematic mesophase at about normal room temperature. The films prepared by the above-described practice were milky-white opaque at room temperature. However, when the films were heated to the nematic-isotropic phase transition temperature near 80°C, they abruptly became clear and transparent. The films remained clear at temperatures above about 80°C but returned to a milky-opaque condition when cooled below that temperature.

When the two glass slides containing thin transparent conductive electrodes were connected to an electrical source and 100 volts, 60 cycle AC applied, the opaque films again became clear and transparent. When the voltage was removed, the films again virtually instantaneously became opaque.

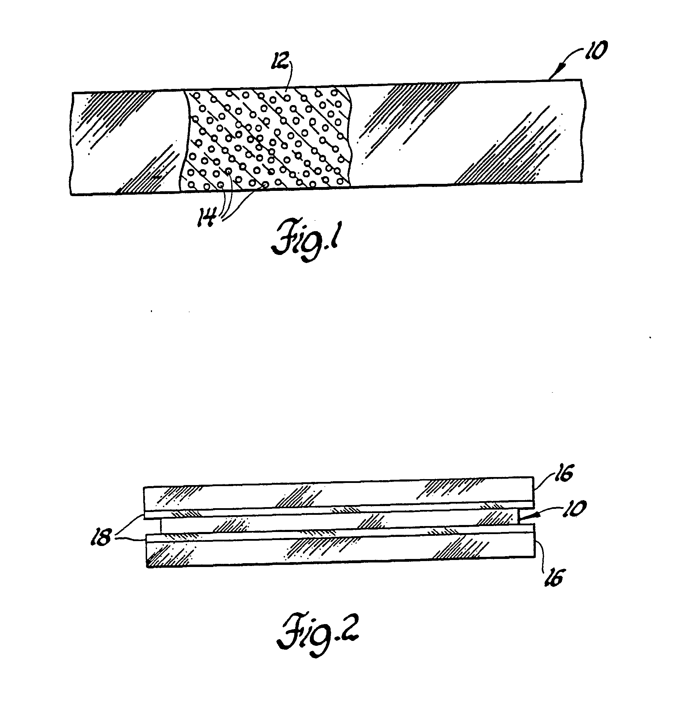

Thus a useful, extremely rapidly curable film of dispersed liquid crystal microdroplets had been produced. The film is represented schematically (greatly enlarged) in Figure 1 at 10. It comprises a UV-cured polymer matrix 12 containing a dispersion of many liquid crystal microdroplets 14. Figure 2 illustrates the film 10 between two glass plates 16. Each plate bears a transparent conductive coating 18 lying against film 10. The film is opaque at room temperature but could readily be converted to a transparent film by the application of heat or of a suitable electrical potential. Clearly by adjusting the indices of refraction of the polymer and the liquid crystal via dissolving suitable materials, one can optimize the temperature-driven effects or the electric or magnetic-driven effects. Obviously such a film could be adapted as a display, a light shutter or a temperature-sensing device.

Example 2

Another set of films were prepared using 75 parts by volume of the same polymer precursor mixture and 50 parts by volume of a single substantially pure liquid crystal material, 4-n-heptyl-4'-cyanobiphenyl (7CB). The two liquids were mixed together by hand using a spatula and a film formed between glass plates having transparent conductive electrodes as described above. The film was milky-opaque at room temperature but quickly became clear and transparent when heated to a temperature of about 45°C. Upon cooling below that temperature, the film again became opaque. This practice could be repeated indefinitely.

As with the liquid crystal mixture of Example 1, the films of this example could also be converted from opaque to transparent by the application of an electrical potential of 50 volts rms across the 20 micrometre thick film. The transparent film became opaque again when the electrical potential was removed.

Additional films that operated in substantially the same way as the above-described films were prepared using the above UV-curable polymer precursor mixture and p-cyanophenyl-p-pentyl-benzoate. Likewise, similar films were made using p-cyanophenyltrans-4-pentylcyclohexanecarboxylate.

Example 3

Films like the first set of films of Example 2 were prepared between two flat slabs of plexiglass. These films could be easily separated from the slabs as free standing films of a few micrometres in thickness. This method provides free standing films that are flexible and tough and can be adapted for use as temperature sensors or light shutters to be easily made or cut to any size, shape or configuration. Clearly any other of the films described in Examples 1 and 2 could be prepared the same way.

Thus, a family of liquid crystal films have been developed in which microdroplets of liquid crystal materials are dispersed in a UV-cured polymer based on triallyl isocyanurate and suitable polythiols. It has been found that these films are particularly useful when employing nematic, cholesteric or smectic liquid crystal materials. Where it is desired to colour the films, suitable dyes may be incorporated therein.

As indicated above, the polythiol component of the UV-curable polymer precursor mixture is suitably a composition taken from the group consisting of $Z[OCO(CH_2)_nSH]_m$, where $Z$ = a polyvalent organic moiety which is the $CH_{0-3}$ group containing nucleus of a trior tetravalent alcohol such as glycerol or pentaerythritol, $m$ = 3 or 4, and $n$ = 1 to 5.

In the examples of the practice of the present invention that were included above, about three parts by volume of polymer precursor materials per two parts by volume of the liquid crystal material were employed. Of course, it will be recognized that the proportions of the matrix-forming material and the liquid crystal material can be varied somewhat to produce the desired film product. The desired result is to obtain a dispersion of extremely finely-divided droplets of the liquid crystal material throughout the polymer matrix.

In the practice of the present invention, the liquid materials are mixed together. At this stage it is not easy to tell how many liquid phases, if there are more than one, are present. However, the mixture can be cast as a film and allowed to stand as long as desired before the UV curing is initiated. After curing, the film may be examined, for example, by scanning electron microscopy (SEM), to determine the size of the droplets and the size range of the droplets of liquid crystal material dispersed in the polymer matrix. Preferably the droplets have of a dimension or diameter of about 0.2 to 1 micrometres when the film is to be used for display or for the control of visible light. It may be desirable to have slightly larger dispersed particles if the film is to be used for applications involving infra-red radiation. The droplet size characteristics of the finished product may be correlated with the mixing time and/or standing time of the preceding process for purposes of determining suitable mixing and standing parameters to make a given liquid crystal film.

**Claims**

1. An optically-responsive film comprising nematic, cholesteric and/or smectic liquid crystal microdroplets (14) dispersed in a polymer film (10), characterised in that the film (10) comprises an ultraviolet radiation-cured reaction product of triallyl isocyanurate and a polythiol taken from the group consisting of $Z[OCO(CH_2)_nSH]_m$, where $Z$ = a polyvalent organic moiety which is the $CH_{0-3}$ group containing nucleus of a tri- or tetravalent alcohol such as glycerol or pentaerythritol, $m$ = 3 or 4, and $n$ = 1 to 5, said microdroplets display positive dielectric anisotropy and positive diamagnetic anisotropy, and said film (10) is capable of undergoing repeated thermally or electrically or magnetically-induced transitions between opaque and transparent.

2. An optically-responsive film according to Claim 1, characterised in that the film (10) is the ultraviolet radiation-cured reaction product of triallyl isocyanurate and pentaerythritol tetrakis (2-mercapto-propanoate).

3. A method of making an optically-responsive film (10) containing microdroplets (14) of nematic, cholesteric and/or smectic liquid crystal material dispersed in a polymer film according to Claim 1, characterised in that the method includes the steps of mixing said liquid crystal material (14) with a UV-curable liquid precursor mixture comprising triallyl isocyanurate and a polythiol taken from the group consisting of $Z[OCO(CH_2)_nSH]_m$, where $Z$ = a polyvalent organic moiety which is the $CH_{0-3}$ group-containing nucleus of a tri- or tetravalent alcohol such as glycerol or pentaerythritol, $m$ = 3 or 4, and $n$ = 1 to 5, and then letting the mixture stand, the time of mixing and the time of standing being determined so as to obtain a desired liquid crystal droplet size and size range in the final polymer matrix, and thereafter curing the mixture in the form of a film (10) with high intensity ultraviolet radiation to thereby form a cured polymer matrix (12) which is a reaction product of said isocyanurate and polythiol, said polymer matrix (12) containing dispersed therein said sized microdroplets (14) of liquid crystal material having positive dielectric anisotropy and positive diamagnetic anisotropy.

4. A method of making an optically responsive film (10) containing microdroplets (14) of nematic, cholesteric and/or smectic liquid crystal material dispersed in a polymer film according to Claim 2, characterised in that the method includes the steps of mixing said liquid crystal material (14) with a UV-curable liquid precursor mixture comprising triallyl isocyanurate and pentaerythritol tetrakis (2-mercapto-propanoate) and then letting the mixture stand, the time of mixing and the time of standing being determined so as to obtain a desired liquid crystal droplet size and size range in the final polymer matrix, and thereafter curing the mixture in the form of a film (10) with high intensity ultraviolet radiation to thereby form a cured polymer matrix (12) which is a reaction product of said precursors, said polymer matrix (12) containing dispersed therein said sized microdroplets (14) of liquid crystal material having positive dielectric anisotropy and positive diamagnetic anisotropy.

## Patentansprüche

1. Optisch reagierender Film mit nematischen, cholesterischen und/oder smektischen Flüssigkristall-Mikrotröpfchen (14), die in einem polymeren Film (10) dispergiert sind, dadurch gekennzeichnet, daß der Film ein durch Ultraviolettstrahlung ausgehärtetes Reaktionsprodukt von Triallylisocyanurat und einem Polythiol ist, das aus der aus $Z[OCO(CH_2)_nSH]_m$ bestehenden Gruppe genommen ist, wobei Z = ein polyvalenter organischer Anteil ist, der der $CH_{0-3}$-Gruppe enthaltende Kern eines tri- oder tetravalenten-Alkohols wie Glyzerin oder Pentaerythrit ist, m = 3 oder 4, und n = 1 bis 5, die Mikrotröpfchen positive dielektrische Anisotropie und positive diamagnetische Anisotropie zeigen und der Film (10) zu wiederholten thermisch oder elektrisch oder magnetisch induzierten Übergängen zwischen undurchsichtig und transparent fähig ist.

2. Optisch reagierender Film nach Anspruch 1, dadurch gekennzeichnet, daß der Film (10) das durch Ultraviolettstrahlung ausgehärtete Reaktionsprodukt von Triallyl-isocyanurat und Pentaerythrit-tetrakis (2-mercapto-propanoat) ist.

3. Verfahren zur Herstellung eines optisch reagierenden Films (10), der Mikrotröpfchen (14) von nematischem, cholesterischem und/oder smektischem Flüssigkristallmaterial in einem polymeren Film dispergiert enthält nach Anspruch 1, dadurch gekennzeichnet, daß bei dem Verfahren das Flüssigkristallmaterial (14) mit einem UV-härtbaren flüssigen Ausgangsgemisch gemischt wird, das Triallyl-isocyanurat und ein Polythiol umfaßt, das aus der aus $Z[OCO(CH_2)_nSH]_m$ bestehenden Gruppe genommen ist, wobei Z = ein polyvalenter organischer Anteil ist, der der $CH_{0-3}$ -Gruppe enthaltende Kern eines tri- oder tetravalenten Alkohols wie Glyzerin oder Pentaerythrit ist, m = 3 oder 4, und n = 1 bis 5, daß dann die Mischung stehen gelassen wird, wobei die Mischzeit und die Zeit des Stehenlassens so bestimmt wird, daß die gewünschte Flüssigkristall-Tröpfchengröße und Größenbereich in der endgültigen polymeren Matrix erhalten wird, und daß danach das Gemisch in Form eines Films (10) mit hochintensiver Ultraviolettstrahlung ausgehärtet wird, um dadurch eine ausgehärtete polymere Matrix (12) zu bilden, die ein Reaktionsprodukt des Isocyanurats und des Polythiols ist, wobei die polymere Matrix (12) darin dispergiert die Mikrotröpfchen (14) bestimmter Größe von Flüssigkristallmaterial mit positiver dielektrischer Anisotropie und positiver diamagnetischer Anisotropie enthält.

4. Verfahren zur Herstellung eines optisch reagierenden Films (10), der Mikrotröpfchen (14) von nematischem, cholesterischem und/oder smektischem Flüssigkristallmaterial in einem polymeren Film dispergiert enthält nach Anspruch 2, dadurch gekennzeichnet, daß bei dem Verfahren das Flüssigkristallmaterial (14) mit einem UV-härtbaren flüssigen Ausgangsgemisch gemischt wird, das Triallyl-isocyanurat und Pentaerythrit-tetrakis (2-mercapto-propanoat) umfaßt, daß dann die Mischung stehen gelassen wird, wobei die Mischzeit und die Zeit des Stehenlassens so bestimmt wird, daß die gewünschte Flüssigkristall-Tröpfchengröße und der Größenbereich in der schließlichen polymeren Matrix erhalten wird, und daß danach das Gemisch in Form eines Films (10) mit hochintensiver Ultraviolettstrahlung ausgehärtet wird, um dadurch eine ausgehärtete polymere Matrix (12) zu bilden, die ein Reaktionsprodukt des Ausgangsgemischs ist, wobei die polymere Matrix (12) darin dispergiert die Mikrotröpfchen (14) bestimmter Größe von Flüssigkristallmaterial mit positiver dielektrischer Anisotropie und positiver diamagnetischer Anisotropie enthält.

## Revendications

1. Film photosensible comprenant des microgouttelettes (14) de cristaux liquides nématiques, cholestériques et/ou smectiques, dispersées dans un film de polymère (10), caractérisé en ce que le film (10) comprend un produit de réaction durci sous un rayonnement ultraviolet, de l'isocyanurate de triallyle et d'un polythiol choisi parmi les composés de formule $Z[OCO(CH_2)_nSH]_m$ dans laquelle Z représente un groupe organique polyvalent qui forme le noyau à groupe $CH_{0-3}$ d'un alcool tri- ou tétravalent, tel que le glycérol ou le pentaérythritol, m est égal à 3 ou 4, et n varie de 1 à 5, ces microgouttelettes manifestant une anisotropie diélectrique positive et une anisotropie diamagnétique positive, et ce film (10) étant capable de supporter des transitions répétées entre les états opaque et transparent, induites par voie thermique, électrique ou magnétique.

2. Film photosensible selon la revendication 1, caractérisé en ce que le film (10) comprend le produit de réaction durci sous un rayonnement ultraviolet, de l'isocyanurate de triallyle et du tétrakis(2-mercapto-propanoate) de pentaérythritol.

3. Procédé de préparation d'un film photosensible (10) contenant des microgouttelettes (14) de cristaux liquides nématiques, cholestériques et/

ou smectiques, dispersées dans un film de polymère selon la revendication 1, caractérisé en ce qu'on mélange ces cristaux liquides (14) avec un mélange de précurseurs liquides durcissable aux UV, comprenant de l'isocyanurate de triallyle et un polythiol choisi parmi les composés de formule $Z[OCO(CH_2)_nSH]_m$ dans laquelle Z représente un groupe organique polyvalent qui forme le noyau à groupe $CH_{0-3}$ d'un alcool tri- ou tétravalent, tel que le glycérol ou le pentaérythritol, m est égal à 3 ou 4, et n varie de 1 à 5; et on laisse ensuite le mélange reposer, le temps de mélange et le temps de repos étant déterminés de façon à obtenir une taille et une distribution de taille des gouttelettes de cristaux liquides requises dans la matrice de polymère finale, et on durcit ensuite le mélange sous la forme d'un film (10) à l'aide d'un rayonnement ultraviolet de haute intensité, pour former une matrice de polymère durci (12) consistant en un produit de réaction de cet isocyanurate et du polythiol, cette matrice de polymère (12) contenant à l'état dispersé, lesdites microgouttelettes calibrées (14) de cristaux liquides ayant une anisotropie diélectrique positive et une anisotropie diamagnétique positive.

4. Procédé de préparation d'un film photosensible (10) contenant des microgouttelettes (14) de cristaux liquides nématiques, cholestériques et/ou smectiques, dispersées dans un film de polymère selon la revendication 1, caractérisé en ce qu'on mélange ces cristaux liquides (14) avec un mélange de précurseurs liquides durcissables aux UV, comprenant de l'isocyanurate de triallyle et du tétrakis(2- mercapto-propanoate) de pentaérythritol, on laisse ensuite le mélange reposer, le temps de mélange et le temps de repos étant déterminés de façon à obtenir une taille et une distribution de taille des gouttelettes de cristaux liquides requises dans la matrice de polymère finale, et on durcit ensuite le mélange sous la forme d'un film (10) à l'aide d'un rayonnement ultraviolet d'intensité élevée, pour former une matrice de polymère durcie (12) consistant en un produit de réaction de ces précurseurs, la matrice de polymère (12) contenant à l'état dispersé, lesdites microgouttelettes calibrées (14) de cristaux liquides ayant une anisotropie diélectrique positive et une anisotropie diamagnétique positive.

EP 0 205 261 B1

Fig.1

Fig.2